# EUROPEAN PATENT APPLICATION

(11) **EP 1 457 886 A1**
(43) Date of publication of application: **15.09.2004**
(21) Application number: 02788721.5
(22) Date of filing: 04.12.2002
(51) Int. Cl.: G06F 12/14, G06F 17/60, G11B 20/10

(54) **DATA USE LIMIT SETTING METHOD, DATA USE LIMIT SETTING APPARATUS, DATA USE LIMIT SETTING PROGRAM, AND RECORDING MEDIUM CONTAINING THE PROGRAM**

(30) Priority: 17.12.2001 JP 2001383650
(71) Applicant: Sharp Kabushiki Kaisha, Osaka-shi, Osaka 545-8522 (JP)
(72) Inventor: SAITOH, Kei, Tenri-shi, Nara 632-0004 (JP); MINAKUCHI, Mitsuru, Soraku-gun, Kyoto 619-0241 (JP); TSUMORI, Osamu, Nara-shi, Nara 631-0033 (JP); MATSUYAMA, Tetsuya, Yamatokoriyama-shi, Nara 639-1008 (JP)
(74) Representative: Brown, Kenneth Richard
(86) International application number: PCT/JP2002/012725
(87) International publication number: WO 2003/052603

(57) **Abstract**

A data use limitation setting method is arranged so as to include a data receiving step (S21 and S25) of receiving from a user terminal device, (A) content data and (B) user authentication data corresponding to the content data; an authentication judging step (S22 and S23) of judging in accordance with the user authentication data, success or failure of authentication; and a data use limitation setting step (S26) of, if the success of the authentication is judged in the judgment, setting on the content data, a data use limitation for limiting use of the content data. With this, it is possible to widely provide as a system for limiting the use of content data, a highly reliable system that is not easily subjected to unauthorized analysis.

## Description

### TECHNICAL FIELD

The present invention relates to a data use limitation setting method, a data use limitation setting apparatus, and a data use limitation setting program which set a data use limitation on content data held by the user; and a recording medium containing the data use limitation setting program.

### BACKGROUND ART

As a conventional technique for protecting copyrights of data, there is a technique which embeds in content data, limitation information for limiting use of the content data. In this technique, a computer reads the limitation information embedded in data when the data is to be used, and limits the use of the data in accordance with the limitation information, thereby protecting the copyrights of the data.

Further, Japanese Unexamined Patent Publication No. 86435/1999 (Tokukaihei 11-86435) discloses an invention in which prohibition information for prohibiting reproduction of data and permission information for limiting the number of reproduction of data are embedded in the data. With this invention, the user is limited from reproducing the data, so that the copyrights of the data are protected.

Specifically, when the user reproduces the data, the computer of the user reads the prohibition information and the permission information, and the reproduction of the data is limited in accordance with the information. Further, a digital signature is put on the permission information. The signature is authenticated when the permission information is read, and the reproduction of the data is prohibited if the authentication is not successful. This prevents unauthorized alteration of the permission information.

As described above, the conventional arrangement limits the use of content data by embedding the limitation information in the content data, and reading the limitation information when using the content data. Further, the conventional arrangement prevents the unauthorized setting or unauthorized alteration of the limitation information by encrypting the limitation information or by putting a digital signature on the limitation information.

In the conventional arrangement, however, the limitation information can be embedded in the content data only by a person who has a key for encrypting or who can put a digital signature. On the other hand, if the limitation information is not encrypted or the digital signature is not put on the limitation information, a general user of the content data can embed the limitation information in the content data. In this case, the general user may embed in the content data, limitation information that is undesired by the creator of the content data, or the general user may rewrite the limitation information.

For this reason, a dedicated tool or software is used to set the use limitation on the content data in the present circumstances. With such a method, however, the use limitation can be freely modified if the tool or software is analyzed. Thus, the reliability of the use limitation is low. Accordingly, the tool or software can be distributed to only a part of reliable users, for improving the reliability by preventing the unauthorized analysis.

As described above, the conventional technique has a problem such that it is not possible to widely provide a highly reliable system for limiting the use of the content data.

Further, the conventional technique also has a problem such that it is not possible to provide a system which allows only the creator of the content data to freely limit the use of the content data.

Therefore the present invention has an objective to widely provide as a system for limiting the use of content data, a highly reliable system that is not easily subjected to the unauthorized analysis. Further, the present invention has another objective to provide a system that allows only the creator of content data to freely limit the use of the content data.

### DISCLOSURE OF INVENTION

In order to solve the foregoing problems, a data use limitation setting method of the present invention is characterized by including a data receiving step of receiving from a user terminal device, (A) limitation setting target data such as content data and (B) user authentication data corresponding to the limitation setting target data; an authentication judging step of judging in accordance with the user authentication data, success or failure of authentication; and a data use limitation setting step of, if the success of the authentication is judged in the judgment, setting on the limitation setting target data, a data use limitation for limiting use of the limitation setting target data.

In this arrangement, the user has registered as a member, for example, so as to set the data use limitation on the limitation setting target data. In the authentication judging step, the user authentication data received in the data receiving step is compared with the user registration information so that success or failure of authentication, namely, whether or not the user who sent the user authentication data has registered as a member, for example, is judged.

In the data use limitation setting step, the data use limitation is set on the limitation setting target data received in the data receiving step, namely the data use limitation is set on the content data, for example, if the success of the authentication is judged in the authentication judging step, namely, if the user who sent the user authentication data is judged to have registered as a member, for example.

Here, the limitation setting target data (content data) is data created by any given user or apparatus. The limitation setting target data may be moving image data, music data, document data, and the like, for example. Further, the data use limitation is a limitation on use of the limitation setting target data by any given user, apparatus, or the like. The data use limitation may limit reproduction, storing, printing, transfer, and editing of the content data, a terminal device that can use the content data, a usable time of the content data, or the like. Further, the data use limitation may limit use of the content data for a specific service, for example.

With this arrangement, in the data use limitation setting step, the data use limitation is set on the limitation setting target data sent from the user terminal device, if the success of the authentication is judged in the authentication judging step. Therefore it is not necessary to provide the user terminal device with a device for setting the data use limitation.

Further, the data use limitation on the limitation setting target data is not set at the user terminal device, but set at a data use limitation setting apparatus which communicates with the user terminal device via the Internet, for example, and which performs the foregoing steps. Therefore it is possible to widely provide a highly reliable system whose method to set the data use limitation is not easily subjected to unauthorized analysis.

The data use limitation setting method may be so arranged that the limitation setting target data includes creator information for specifying a creator of the limitation setting target data, the data use limitation setting method further including a creator information acquiring step of acquiring the creator information from the limitation setting target data; and an association judging step of judging whether or not the user authentication data is associated with the creator information, the data use limitation setting step being carried out only if, in the association judging step, the creator information that is acquired from the limitation setting target data is judged to be associated with the user authentication data that is received in accordance with a request to set the data use limitation on the limitation setting target data.

In this arrangement, the creator information is a serial ID assigned to each user of the creation tool of the limitation setting target data (content data), for example. The creator information itself may be used as the user authentication data. Further, the ID that is used as the user authentication data may be associated with the creator information when the user is registered, for example.

In this arrangement, only if, in the association judging step, the creator information that is acquired from the limitation setting target data is judged to be' associated with the user authentication data that is received in accordance with a request to set the data use limitation on the limitation setting target data, the data use limitation setting step is carried out, namely, the data use limitation is set on the limitation setting target data.

Therefore, in addition to the judgment in accordance with the user authentication data as to success or failure of the authentication, it is judged whether or not the user who requested to set the data use limitation on the limitation setting target data is the creator of the limitation setting target data (content data). With this, it is possible to prevent unauthorized data use limitation from being set in accordance with a request from the user who acquired the use authentication data in an unauthorized manner. For example, it is possible to prevent the alteration of the data use limitation on the limitation setting data, which is intended for unauthorized use of the limitation setting target data (content data), and the like. Further, it is possible to prohibit the data use limitation from being set against the intentions of the creator of the limitation setting target data. This can further increase the reliability of the system which implements the method of the present invention.

The data use limitation setting method may be so arranged that in the data use limitation setting step, the data use limitation is desirably selected by a user, the data use limitation being set on the limitation setting target data in accordance with use limitation setting data received from the user terminal device.

With this arrangement, the user can desirably select the data use limitation in accordance with the form of the limitation setting target data, the type of the user, and the like. As an example, the data use limitation may be set such that the data use limitation cannot be reset if the data use limitation has been already set on the content data. As another example, the data use limitation may be set such that resetting that intensifies the currently set limitation is only permitted if the data use limitation has been already set on the content data. As a further example, the data use limitation may be set such that the use of specific data is prohibited to only a specific user.

As described above, in the arrangement of the present invention, the data use limitation can be desirably selected by the user, thereby enhancing the convenience of the system which implements the method of the present invention.

The data use limitation setting method may be arranged so as to further include the step of sending to a designated terminal device in response to a request sent from the user terminal device, the limitation setting target data on which the data use limitation has been set in the data use limitation setting step.

In this arrangement, the designated terminal device is a terminal device of a copyright holder of the limitation setting target data (content data), and a terminal device of a specific customer, for example.

With this arrangement, the limitation setting target data on which the data use limitation has been set can be directly sent to the designated terminal device desired by the user without being sent to the user terminal device, thereby enhancing the convenience of the system which implements the method of the present invention.

The data use limitation setting method may be arranged so as to further include the step of sending to a device that has a purpose of providing the limitation setting target data, the limitation setting target data on which the data use limitation has been set in the data use limitation setting step.

In this arrangement, the device that has a purpose of providing the limitation setting target data is a server for a downloading service of the limitation setting target data (content data) and a server for a transmission service of the content data, for example.

With this arrangement, the limitation setting target data on which the data use limitation has been set can be directly sent to the device that has a purpose of providing the limitation setting target data without being sent to the user terminal device, thereby enhancing the convenience of the system which employs the method of the present invention.

The data use limitation setting method may be arranged so as to further include the step of billing a user who requested to set the data use limitation on the limitation setting target data.

With this arrangement, by billing the user who requested to set the data use limitation on the limitation setting target data, it is possible to properly make profits in the service of setting the data use limitation on the limitation setting target data.

Further, a step of selecting a billing price depending on the user may be further provided in the step of billing. The billing price depending on the user may be selected in accordance with the type of the user, the type of the data use limitation to be set, the type of the limitation setting target data, and the like.

As an example, when the price is billed at a metered rate per limitation setting target data, a unit price is discounted if the data use limitation is requested to be set on a large amount of the data use limitation target data at a time. As another example, the billing price is varied depending on whether the limitation setting target data on which the data use limitation is set is used for profit or for nonprofit. As a further example, a student discount is applied to the billing price if the user is a student. As yet another example, billing price information for setting the data use limitation is embedded in the limitation setting target data, and the billing price is calculated based on the billing price information. With this arrangement, it is possible to provide the user with a variety of billing methods.

A data use limitation setting apparatus of the present invention is characterized by including communication means for sending and receiving data to and from a user terminal device; authentication judging means for judging in accordance with user authentication data received from the user terminal device, success or failure of authentication; and data use limitation setting means for, if the authentication judging means judges the success of the authentication, setting on limitation setting target data that is received from the user terminal device, a data use limitation for limiting use of the limitation setting target data, the limitation setting target data corresponding to the user authentication data.

In this arrangement, the user has registered as a member, for example, so as to set the data use limitation on the limitation setting target data. The authentication judging means compares the user authentication data received by the communication means with the user registration information so as to judge success or failure of authentication, namely, whether or not the user who sent the user authentication data has registered as a member, for example.

Further, the data use limitation setting means sets the data use limitation on the limitation setting target data received in the data receiving step, namely, sets the data use limitation on the content data, for example, if the authentication judging means judges the success of the authentication, if the authentication judging means judges that the user who sent the user authentication data is judged to have registered as a member, for example.

As described above, the data use limitation setting means sets the data use limitation on the limitation setting target data sent from the user terminal device, if the success of the authentication is judged in the authentication judging means. Therefore it is not necessary to provide the user terminal device with a device for setting the data use limitation.

Further, the data use limitation on the limitation setting target data is not set at the user terminal device, but set at a data use limitation setting apparatus. Therefore it is possible to widely provide a highly reliable system whose method to set the data use limitation is not easily subjected to unauthorized analysis.

The data use limitation setting apparatus may be arranged so that the limitation setting target data includes creator information for specifying a creator of the limitation setting target data, the data use limitation setting apparatus further including creator information acquiring means for acquiring the creator information from the limitation setting target data; and association judging means for judging whether or not the user authentication data is associated with the creator information, the data use limitation setting means setting the data use limitation only if the association judging means judges that the creator information that is acquired from the limitation setting target data is associated with the user authentication data that is received in accordance with a request to set the data use limitation on the limitation setting target data.

With this arrangement, only if the association judging means judges that the creator information that is acquired from the limitation setting target data is judged to be associated with the user authentication data that is received in accordance with a request to set the data use limitation on the limitation setting target data, the data use limitation setting means sets the data use limitation on the limitation setting target data.

Therefore, in addition to the judgment in accordance with the user authentication data as to success or failure of the authentication, it is judged whether or not the user who requested to set the data use limitation on the limitation setting target data is the creator of the limitation setting target data (content data). With this, it is possible to prevent unauthorized data use limitation from being set in accordance with a request from the user who acquired the use authentication data in an unauthorized manner. For example, it is possible to prevent the alteration of the data use limitation on the limitation setting data, which is intended for unauthorized use of the limitation setting target data (content data), and the like. Further, it is possible to prohibit the data use limitation from being set against the intentions of the creator of the limitation setting target data. This can further increase the reliability of the system which is provided with the data use limitation setting apparatus of the present invention.

A data use limitation setting program of the invention causes a computer to realize each of the means in the foregoing data use limitation setting apparatus.

A recording medium of the present invention is a computer-readable recording medium that contains the foregoing data use limitation setting program.

For a fuller understanding of the nature and advantages of the invention, reference should be made to the ensuing detailed description taken in conjunction with the accompanying drawings.

### BRIEF DESCRIPTION OF DRAWINGS

Figure 1 is a block diagram showing an arrangement of a data use limitation setting system in accordance with an embodiment of the present invention.
Figure 2 is a block diagram showing another example of the data use limitation setting system shown in Figure 1.
Figure 3 is a block diagram showing a further example of the data use limitation setting system shown in Figure 1.
Figure 4 is a block diagram more concretely showing an arrangement of a data use limitation setting server shown in Figure 3.
Figure 5(a) is a flow chart showing the operation of a user terminal device, and Figure 5(b) is a flow chart showing the operation of a data use limitation setting server, both in a case where a data use limitation is set on content data in the data use limitation setting system shown in Figure 1.
Figure 6 is an explanatory diagram showing an example of a data use limitation setting screen displayed on a display section of the user terminal device shown in Figure 1.
Figure 7 is an explanatory diagram showing an example of use limitation setting data which is sent from the user terminal device to the data use limitation setting server in the operations shown in Figures 5(a) and 5(b).
Figure 8(a) is a flow chart showing the operation of a user terminal device, and Figure 8(b) is a flow chart showing the operation of a data use limitation setting server, both in a case where a data use limitation is set on content data in the data use limitation setting system shown in Figure 2.
Figure 9 is an explanatory diagram showing an example of use limitation setting data which is sent from the user terminal device to the data use limitation setting server in the operations shown in Figures 8(a) and 8(b).
Figure 10 is a block diagram showing yet another example of the data use limitation setting system shown in Figure 1.
Figure 11(a) is a flow chart showing the operation of a stamp service provider terminal device, and Figure 11(b) is a flow chart showing the operation of a data use limitation setting server, both in a case where a data use limitation is set on content data in the data use limitation setting system shown in Figure 10.
Figure 12 is an explanatory diagram showing an example of use limitation setting data which is sent from the stamp service provider terminal device to the data use limitation setting server in the operations 'shown in Figures 11(a) and 11(b).
Figure 13(a) is a flow chart showing the operation of a user terminal device, and Figure 13(b) is a flow chart showing the operation of a data use limitation setting server, both in a case where unauthorized use of the content data is prevented in the data use limitation setting system shown in Figure 1.
Figure 14 is an explanatory diagram showing an example of data use limitation data which has been set on the content data before the operations shown in Figures 13(a) and 13(b).
Figure 15 is an explanatory diagram showing an example of unauthorized data use limitation data which is attempted to be set on the content data in the operations shown in Figures 13(a) and 13(b).
Figure 16 is a block diagram showing an arrangement of the data use limitation setting system shown in Figure 1 in a case where content data on which the data use limitation has been set is sent to a designated terminal device.
Figure 17(a) is a flow chart showing the operation of a user terminal device, and Figure 17(b) is a flow chart showing the operation of a data use limitation setting server, both in a case where content data on which the data use limitation has been set is sent to a designated terminal device in the data use limitation setting system shown in Figure 16.
Figure 18 is an explanatory diagram showing an example of use limitation setting data which is sent from the user terminal device to the data use limitation setting server in the operations shown in Figures 17(a) and 17(b).
Figure 19 is an explanatory diagram showing an example of destination data which is sent from the user terminal device to the data use limitation setting server in the operations shown in Figures 17(a) and 17(b).
Figure 20 is a block diagram showing an arrangement of the data use limitation setting system shown in Figure 1 in a case where content data on which the data use limitation has been set is sent to a content providing server.
Figure 21(a) is a flow chart showing the operation of a user terminal device, and Figure 21(b) is a flow chart showing the operation of a data use limitation setting server, both in a case where content data on which the data use limitation has been set is sent to a content providing server in the data use limitation setting system shown in Figure 20.
Figure 22 is an explanatory diagram showing an example of use limitation setting data which is sent from the user terminal device to the data use limitation setting server in the operations shown in Figures 21(a) and 21(b).

### BEST MODE FOR CARRYING OUT THE INVENTION

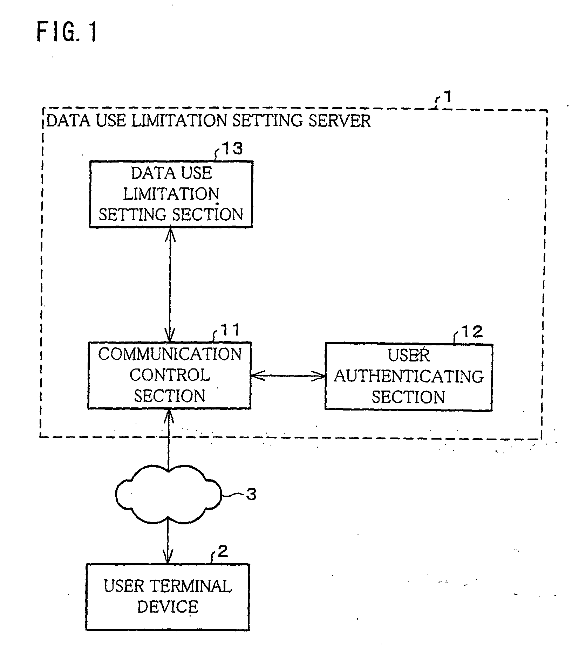

The following will explain an embodiment of the present invention with reference to Figures 1 through 22.

As shown in Figure 1, a data use limitation setting system of the present embodiment is provided with a data use limitation setting server (data use limitation setting apparatus) 1 composed of a computer. In response to a request from a user, the data use limitation setting server 1 sets a use limitation on content data that is sent from a user terminal device 2. The user terminal device 2 is composed of a computer, for example, and used by the user. The content data is animation data, image data, music data, or document data, for example.

The data use limitation setting server 1 is configured as a system for setting a data use limitation on the content data. The data use limitation setting server 1 is provided with a communication control section (communication means) 1, a user authenticating section (authentication judging means) 12, and a data use limitation setting section (data use limitation setting means) 13.

The communication control section 11 performs data transmission and data reception with respect to the user terminal device 2, and receives data sent from the user terminal device 2. The data includes content data, user authentication data, and use limitation setting data. The content data, use limitation setting data, and user authentication data may be transmitted using an e-mail attachment (affix), a HTTP request, and the like. The use limitation setting data may be sent separately from the content data. Alternatively, the use limitation setting data may be embedded in the content data and sent together with the content data.

The user terminal device 2 may be composed of a PC (personal computer), a server, a cellular phone, a PDA (Personal Digital Assistant), or other terminal device having communication function. The data use limitation setting server 1 (communication control section 11) is connected to the user terminal device 2 via the Internet 3, for example: Note that, instead of the communication using the Internet 3, communication using wired line such as a telephone circuit and a LAN cable, or wireless communication such as infrared data communication may be used to connect the data use limitation setting server 1 with the user terminal device 2.

The user authenticating section 12 performs user authentication in accordance with the user authentication data sent from the user terminal device 2, so as to judge whether or not the user is authorized to use the data use limitation setting server 1. The user authentication data may be arranged to include at least a user ID (authentication ID) for specifying the user and a password for identifying the user. The user authentication data may further include data for specifying the user terminal device 2, and the like.

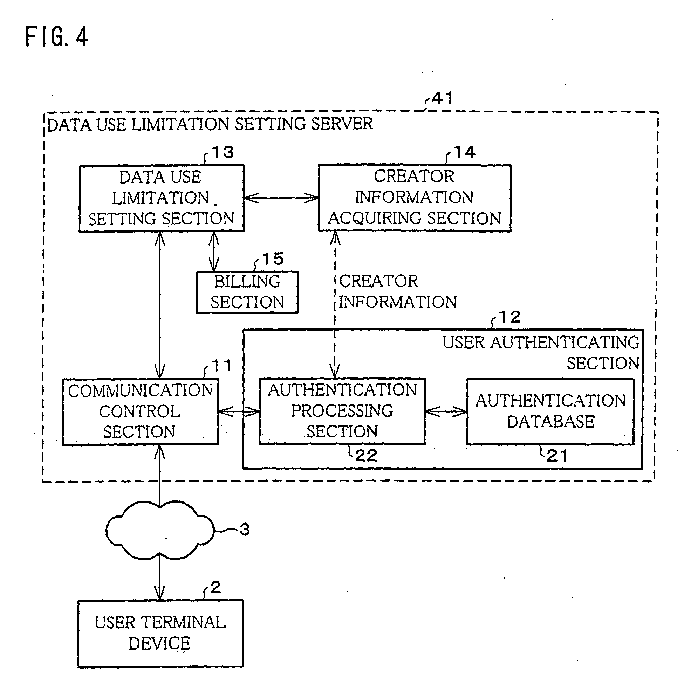

Accordingly, the user authentication is performed by pre-registering a user ID and a password in a database, and by comparing the pre-registered user ID and password with user ID and password that are received as the user authentication data from the user terminal device 2. In order to carry out this processing, the user authenticating section 12 is provided with an authentication database 21 for containing the pre-registered user ID and the password, and an authentication processing section 22 for performing the comparing processing so as to judge whether or not the user is authorized to use the data use limitation setting server 1, as shown in Figure 4.

Note that, the user authentication may be alternatively performed in the following manner. For example, the user terminal device 2 sends a credit card number as the user authentication data, and the user authentication data 22 judges whether or not a credit card corresponding to the credit card number is valid. With this, the authentication processing section 22 judges whether or not the use of the data use limitation setting server 1 is allowed in accordance with the judgment result. In this case, the credit card may be further billed. As an alternative example, the user terminal device 2 may have a unique ID, and the ID of the user terminal device 2 is used as the user authentication data.

In accordance with the use limitation setting data received from the user terminal device 2, the data use limitation setting section 13 sets the data use limitation on the content data that is received from the user terminal device 2, if the user authentication section 12 has judged that the use of the data use limitation setting server 1 is allowed. The content data on which the data use limitation is set by the data use limitation setting section 13 is sent to, for example, the user terminal device 2 by the communication control section 11.

The data use limitation may limit reproduction, transfer, storing, downloading, printing, and editing of the content data, use of the content data for a specific service, a terminal device that can use the content data, or the like. If the data use limitation is set on the content data, the above-mentioned processing, etc., is entirely prohibited on the content data, or even if the processing, etc., can be performed on the content data, some limitation is applied.to the processing, etc., in accordance with how the data use limitation is set.

An objective to set the data use limitation is, for example, to prohibit the reproduction, transfer, etc., of the content data, and permit only a billed user to use the content data. Another objective to set the data use limitation is to prohibit the editing of the content data in order to prevent the content data from being altered against the intentions of the creator of the content data.

Note that, if the content data is used as an advertisement to an unbilled user, the data use limitation may be arranged so as not to prohibit the reproduction and transfer of the content data in order to allow the content data to be freely distributed for an advertising purpose. In this case, on the other hand, the content data may be prohibited from being stored in the user terminal device 2.

Alternatively, the use limitation may be set in such a manner that the price of the content data is varied in accordance with whether or not the printing of the content data is permitted, for example. With this, it is possible to provide a variety of services in addition to the protection of the copyrights.

Further, settable types of the data use limitation may be limited depending on the user who requested the processing. For example, the user who is billed a higher price may be allowed to set more types of the data use limitation. Further, settable types of the data use limitation may be modified in accordance with the type, data amount, etc., of the content data.

Further, the data use limitation setting section 13 may be arranged to set the data use limitation on the content data in the following manner. First, the data use limitation setting section 13 analyzes the content data received from the user terminal device 2, and creates possible data use limitation items that can be set on the content data. Next, the possible data use limitation items are sent to the user terminal device 2 via the communication control section 11. The user terminal device 2 then allows the user to select a desired item or items of the data use limitation from the possible data use limitation items. After this, from the user terminal device 2, the data use limitation setting section 13 receives the selected data use limitation item that is selected by the user. The data use limitation setting section 13 then sets the data use limitation on the content data in accordance with the selected data use limitation item. In this case, the use limitation setting data is the selected data use limitation item.

Alternatively, for setting the data use limitation, the data use limitation setting section 13 may use information such as a file extension of the content data so as to determine a data use limitation item to be set on the content data. In this case, the use limitation setting data is the information such as a file extension used for determining the data use limitation item to be set.

Note that, unauthorized analysis of the data use limitation setting section 13 degrades the reliability of the data use limitation. It is. thus desirable that the data use limitation setting section 13 is protected with high security.

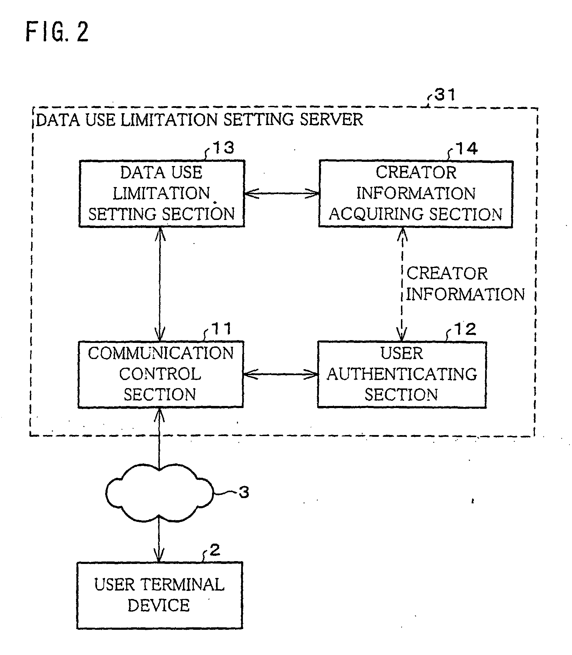

Further, the arrangement of the data use limitation setting system is not limited to the arrangement that is provided with the data use limitation setting server 1 as shown in Figure 1. The arrangement of the data use limitation setting system may be arranged to further include a creator information acquiring section 14 as in a data use limitation setting server 31 as shown in Figure 2. The creator information acquiring section 14 acquires from the content data, creator information for specifying the creator of the content data.

The creator information is a serial ID assigned to each user of the creation tool (creation software) of the content data, for example. The creator information is embedded in the content data when the user creates the content data. The creator information may be embedded as header information of the content data, for example, or may be embedded using an electronic watermark technique. It is desirable to encrypt the creator information so that the creator information is not subjected to unauthorized alteration or unauthorized analysis.

The creator information itself may be used as the user authentication data. In this case, the authentication processing section 22 in the user authenticating section 12 judges whether or not creator information that is pre-stored in the authentication database 21 as the user authentication data is identical to the creator information acquired by the creator information acquiring section 14. Then, the data use limitation setting section 13 sets the data use limitation on the content data only if the pre-stored creator information and the acquired creator information are identical to each other. In Figure 2, the dotted line indicates the processing in which the creator information acquiring section 14 supplies the acquired creator information to the user authenticating section 12.

Note that, in a case where the data use limitation setting server 31 is in danger of being used in an unauthorized manner if the creator information is used as the user authentication data, the data use limitation setting server 31 may be arranged as follows. Namely, the authentication database 21 in the user authenticating section 12, for example, is arranged to hold a table showing correspondence between the user authentication data and the creator information. Here, the user limitation setting section 13 sets the data use limitation on the content data if the authentication processing section 22 confirms that the creator information that is acquired by the creator information acquiring section 14 corresponds to the user authentication data, instead of directly using the creator information as the user authentication data.

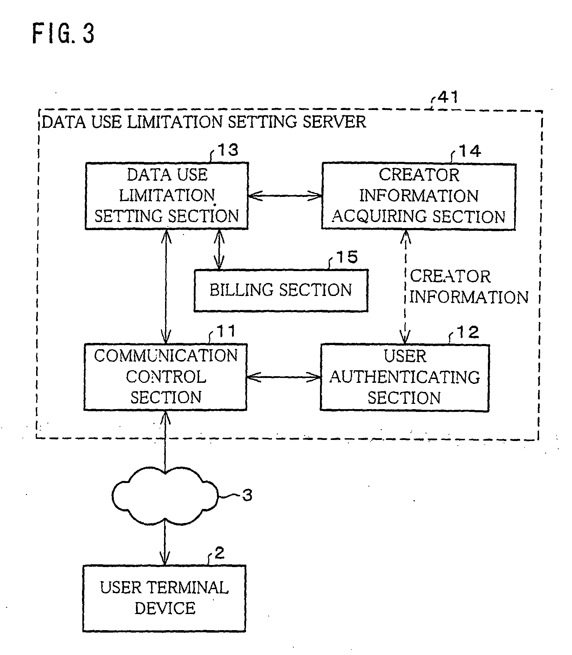

Further, the data use limitation setting system may be arranged so as to further include a billing section 15 as in the data use limitation setting server 41 shown in Figure 3. The billing section 15 bills the user who requested the setting of the data use limitation on the content data.

The billing section 15 bills a credit-card number, a bank account, or the like, which are pre-registered by the user, for example. A variety of forms may be appropriately used in the billing. For example, the billing price may not be uniform, but may be varied depending on the number of items or type of the data use limitation that is set on the content data. Alternatively, the billing price may be varied depending on the user, the intended use of the data after the use limitation is set, or the like.

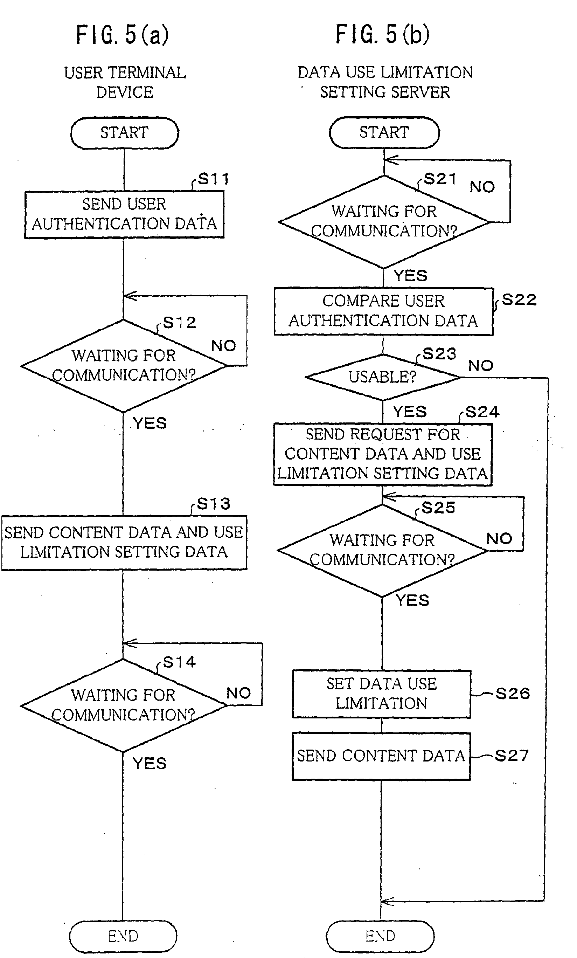

With respect to the foregoing arrangement, the operation of the data use limitation setting system shown in Figure 1 will be explained with reference to flow charts shown in Figure 5. Figure 5(a) shows the operation of the user terminal device 2 which requests the data use limitation setting server 1 to set the data use limitation on the content data. Figure 5(b) shows the operation of the data use limitation setting server 1 which sets the data use limitation on the content data. Here, animation data is used as an example of the content data. The creator of the animation data creates the animation data so as to distribute the animation data as sample data to the customers of the creator. The creator accordingly requests the data use limitation setting server 1 to set on the animation data, the data use limitation that prohibits editing, so that the animation data is not altered by a customer who receives the animation data.

First, the user terminal device 2 sends user authentication data to the data use limitation setting server 1 (S11) so as to confirm whether or not the user is authorized to use the data use limitation setting server 1. Note that, the user ID and the password, for example, which are pre-registered in the data use limitation setting server 1 are used for comparing with the user authentication data.

In the data use limitation setting server 1, when the communication control section 11 receives the user authentication data from the user terminal device 2 (S21), the authentication processing section 22 in the user authenticating section 12 compares the received user authentication data, namely a user ID and a password, with the user ID and the password that are registered in the authentication database 21 (S22). With this, the authentication processing section 22 judges whether or not the user terminal device 2 is authorized to use the data use limitation setting server 1 (S23).

If the user (creator of the content data) is authorized to use the data use limitation setting server 1 as a result of the judgment of the authentication processing section 22, the communication control section 11 requests the user terminal device 2 to send (A) the animation data as the content data and (B) the use limitation setting data (S24).

In response to this request (S12), the user terminal device 2 sends the animation data and the use limitation setting data to the data use limitation setting server 1 (S13). Here, the animation data may be sent either together with or separately from the use limitation setting data.

Here, the data use limitation setting server 1 receives the content data first, and in accordance with the content data, the data use limitation setting section 13 creates possible (settable) data use limitation items that can be set on the content data. The data use limitation setting server 1 then sends the possible data use limitation items to the user terminal device 2 so as to allow the user terminal device 2 to display the possible data use limitation items.

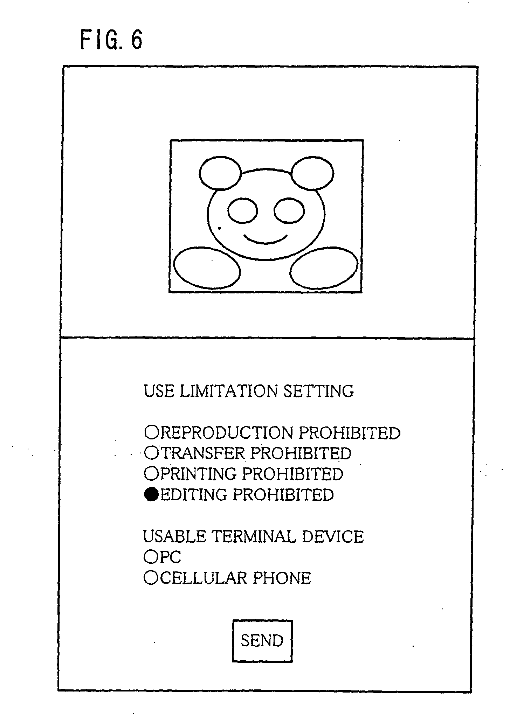

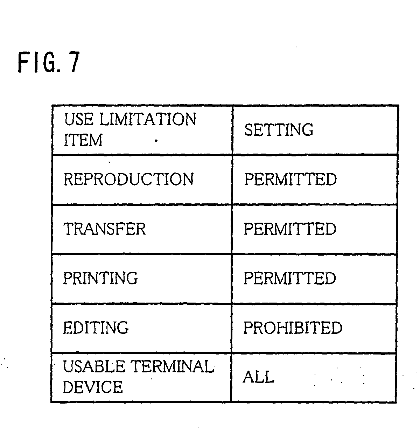

Figure 6 is an example of a data use limitation setting scene that is displayed on a display section of the user terminal device 2 in accordance with the possible data use limitation items sent from the data use limitation setting server 1. In the data use limitation setting scene, the user selects from the use limitation setting items shown in Figure 6. Namely, the user selects (A) one or more of the items including reproduction prohibited, transfer prohibited, printing prohibited, and editing prohibited, and (B) a usable terminal device (unusable terminal device), for example, and then presses a SEND button. With this, the user terminal device 2 sends to the data use limitation setting server 1 the selected items as the use limitation setting data. Note that, editing prohibited is selected in Figure 6. Figure 7 shows an example of the use limitation setting data.

As an example other than the arrangement using the data use limitation setting screen, the authentication database 21, for example, in the data use limitation setting server 1 may pre-register use limitation setting data corresponding to the user authentication data. In this case, the data use limitation setting server 1 authenticates the user and sets the data use limitation, only by receiving the user authentication data and the content data that are sent from the user terminal device 2.

When receiving the content data and the use limitation setting data from the user terminal device 2 (S25), the data use limitation setting section 13 in the data use limitation setting server 1 modifies the content data in accordance with the use limitation setting data so as to prohibit the content data from being edited. In other words, the use limitation that prohibits editing is set (S26).

After this, the communication control section 11 in the data use limitation setting server 1 sends to the user terminal device 2, the content data on which the use limitation is set (S27). The user terminal device 2 receives the content data (S14).

Note that, it is preferable that all of the data that is sequentially transmitted between the data use limitation setting server 1 and the user terminal device 2 as described above is encrypted for security.

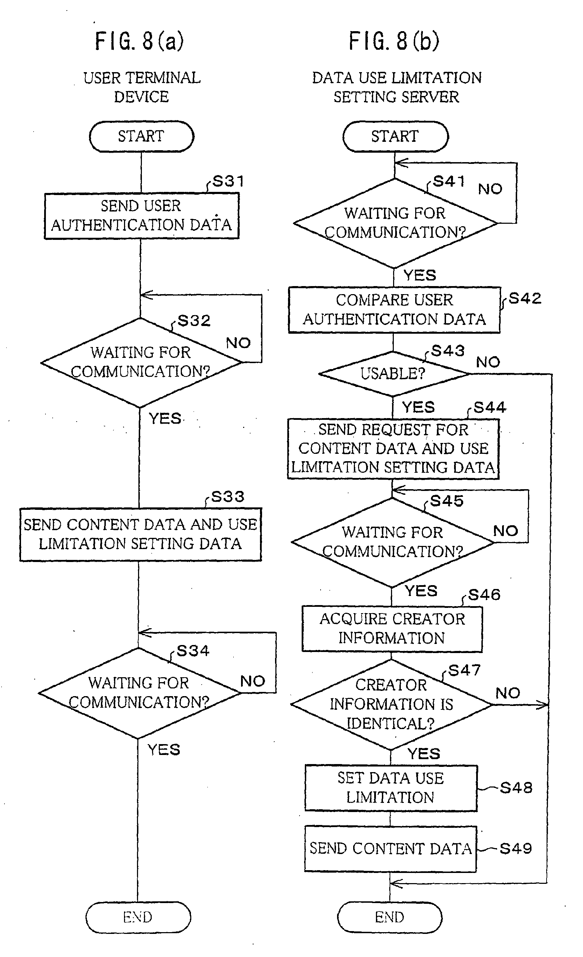

Next, the operation of the data use limitation setting system shown in Figure 2 will be explained with reference to flow charts shown in Figure 8. Figure 8(a) shows the operation of the user terminal device 2 which requests the data use limitation setting server 31 to set the data use limitation on the content data. Figure 8(b) shows the operation of the data use limitation setting server 31 which sets the data use limitation on the content data. Here, the creator information is used in setting the data use limitation on the content data. The creator information is a serial ID assigned to each user of the tool for creating the content data, for example.

First, the user terminal device 2 sends user authentication data to the data use limitation setting server 31 (S31) so as to confirm whether or not the user is authorized to use the data use limitation setting server 31. Here, the serial ID and the password of the creator of the content data, which are pre-registered in the data use limitation setting server 31, are used for comparing with the user authentication data. The serial ID is automatically assigned to the user (creator of the content data) when the tool for creating the content data is distributed to the user.

In the data use. limitation setting server 31, when the communication control section 11 receives the user authentication data (creator information) from the user terminal device 2 (S41), the authentication processing section 22 in the user authenticating section 12 compares the received user authentication data (creator information), namely the serial ID and password of the creator of the content data, with user information, namely the pre-registered serial ID and password, which is registered in the authentication database 21 (S42). With this, the authentication processing section 22 judges whether or not the user terminal device 2 is authorized to use the data use limitation setting server 31 (S43).

If the user (creator of the content data) is authorized to use the data use limitation setting server 31 as a result of the judgment of the authentication processing section 22, the communication control section 11 requests the user terminal device 2 to send the content data and the use limitation setting data (S44).

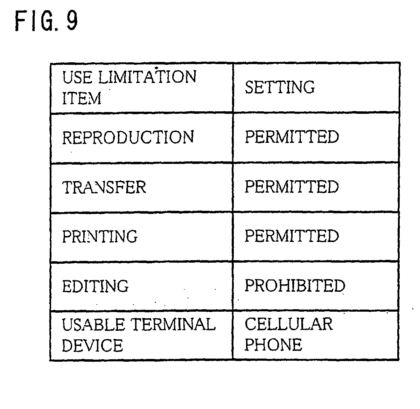

In response to this request (S32), the user terminal device 2 sends the content data and the use limitation setting data to the data use limitation setting server 31 (S33). Here, the content data may be sent either together with or separately from the use limitation setting data. Note that, if the content data is sent separately from the use limitation setting data, the use limitation setting data is created as in the data use limitation setting system shown in Figure 1, for example, as described earlier. Figure 9 shows an example of the user limitation setting data here. The use limitation setting data permits the reproduction, transfer, and printing of the content data, and prohibits the editing of the content data. Further, a cellular phone is designated as a usable terminal device.

When receiving the content data and the use limitation setting data from the user terminal device 2 (S45), the creator information acquiring section 14 in the data use limitation setting server 31 acquires the creator information, namely the serial ID of the creator of the content data, which is embedded in the content data (S46), and supplies the acquired creator information to the user authenticating section 12.

The user authentication section 12 judges whether or not the serial ID that is supplied from the creator information acquiring section 14 is identical to the serial ID that is used for comparing with the user authentication data (S47). In this case, the serial ID that is used for comparing with the user authentication data is the pre-registered serial ID that is pre-stored, for example, in the authentication database 21 and used in the comparing in S42, or the serial ID that is sent from the user terminal device 2 in S31 .and stored, for example, in the authentication database 21.

As a result of the judgment of the user authenticating section 12, if the serial ID supplied from the creator information acquiring section 14 is not identical to the serial ID that is used for comparing with the user authentication data, the processing ends. If the serial ID supplied from the creator information acquiring section 14 is identical to the serial ID that is used for comparing with the user authentication data, on the other hand, the data use limitation setting section 13 modifies the content data in accordance with the use limitation setting data so as to prohibit the content data from being edited. In other words, the use limitation that prohibits editing is set (S48).

After this, the communication control section 11 in the data use limitation setting server 31 sends to the user terminal device 2, the content data on which the use limitation is set (S49). The user terminal device 2 receives the content data (S34).

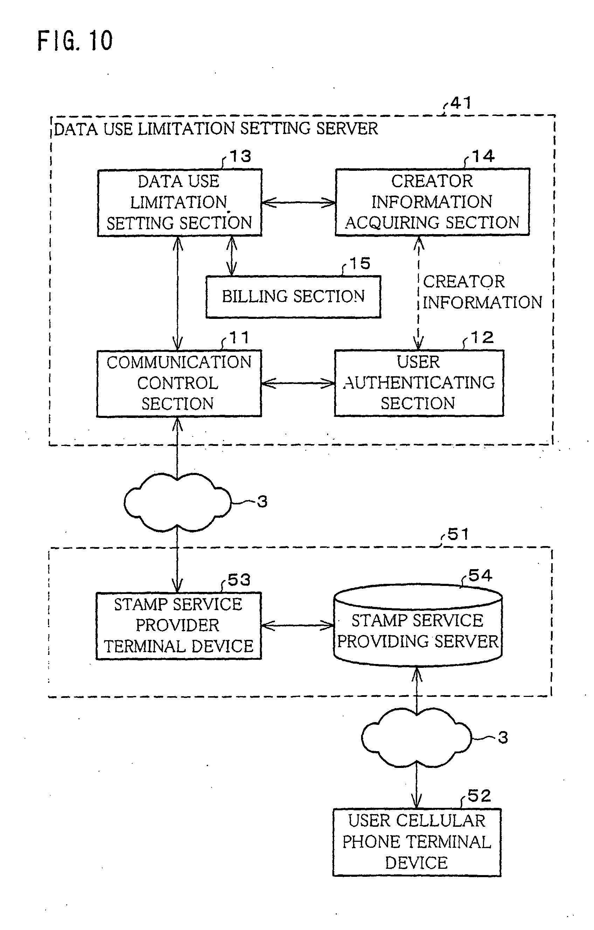

Next, an arrangement of the data use limitation setting system in which a limitation on the number of uses is set as the data use limitation on the content data will be explained with reference to Figure 10. The data use limitation setting system shown in Figure 10 is provided with the data use limitation setting server 41, a stamp service device 51, and a user cellular phone terminal device 52.

The use of the data use limitation setting server 41 in this data use limitation setting system is only an example, and another data use limitation setting server 1 or 31 may be alternatively used in the data use limitation setting system. The stamp service device 51 provides the user with the content data whose number of uses is limited. The stamp service device 51 is provided with a stamp service provider terminal device 53 and a stamp service providing server 54, each of which is composed of a computer, for example. The stamp service provider terminal device 53 sends and receives data to and from (A) the communication control section 11 in the data use limitation setting server 41 and (B) the stamp service providing server 54. The stamp service providing server 54 holds the content data which is to be subjected to stamp service. The content data to be subjected to stamp service is an image, moving images, animation, or music data, for example. The user cellular phone terminal device 52 is an example of the user terminal device 2, and uses services of the data use limitation setting server 41 and the stamp service device 51.

In this example, the stamp service device 51 provides the user cellular phone terminal device 52 with a stamp service that is dedicated for cellular phone. Here, the stamp service is a service for providing affixing content data to the content data. Directly, the stamp service is performed by the stamp service providing server 54 in the stamp service device 51. By affixing the affixing content data to another content data as if affixing an actual stamp, the original content data ceases to exist. Further, the affixing content data once used for the affixing cannot be reused by being separated from the affixed content data.

Further, the content data to which the affixing content data is affixed may be an image, moving images, animation, or music data, for example. Further, the affixing content data provided by the stamp service device 51 may be an image, moving images, animation, or music data, for example. Namely, in this data use limitation setting system, the stamp service device 51 allows the user cellular phone terminal device 52 to download image data, music data, etc., which is the affixing content data to be affixed to the affixed content data such as image data or moving image data.

Further, in the data use limitation setting system, the user of the data use limitation setting server 41 is the stamp service device 51. In other words, the data use limitation setting server 41 sets the data use limitation on the content data that is requested by the stamp service device 51.

Further, the data use limitation setting system uses the user ID, for example, as the user authentication data that is sent from the stamp service provider terminal device 53 to the data use limitation setting server 41. The authentication database 21 in the user authenticating section 12 holds a table showing correspondence between the user authentication data and the creator information. With this; the data use limitation setting section 13 sets the data use limitation on the content data if the authentication processing section 22 confirms that the user authentication data corresponds to the creator information.

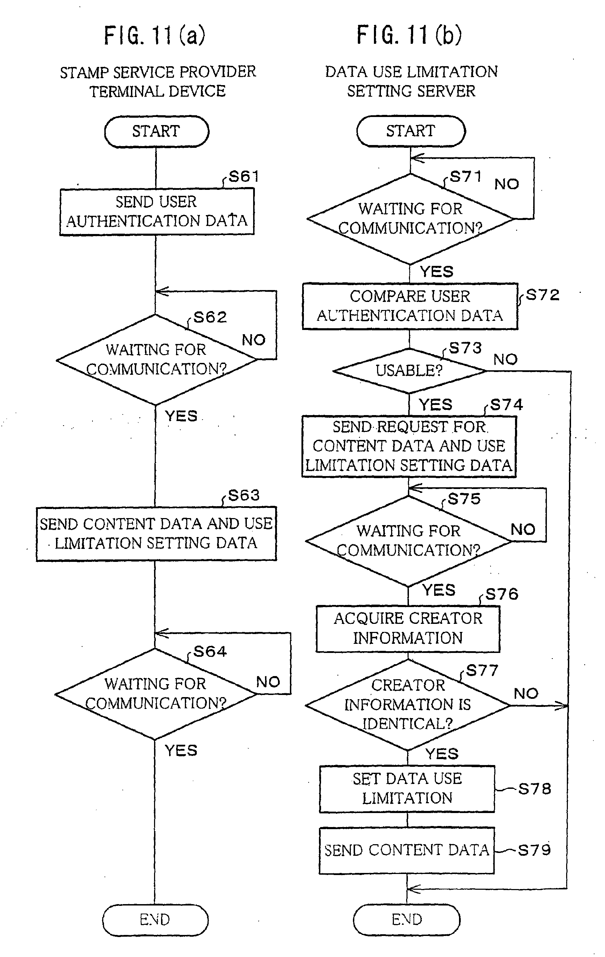

The operation of the stamp service device 51 and the data use limitation setting server 41 in this case will be explained with reference to flow charts shown in Figure 11. Figure 11 (a) shows the operation of the stamp service provider terminal device 53 which requests the data use limitation setting server 41 to set the data use limitation on the content data. Figure 11(b) shows the operation of the data use limitation setting server 41 which sets the data use limitation on the content data. Here, the creator information is used in setting the data use limitation on the content data, as in the operation shown with reference to Figure 8.

First, the stamp service provider terminal device 53 sends a user ID as the user authentication data to the data use limitation setting server 41 (S61) so as to confirm whether or not the stamp service provider terminal device 53 is authorized to use the data use limitation setting server 41. The user ID has been assigned to the stamp service device 51, and pre-registered in the data use limitation setting server 41.

In the data use limitation setting server 41, when the communication control section 11 receives the user authentication data (user ID) from the stamp service provider terminal device 53 (S71), the authentication processing section 22 in the user authenticating section 12 compares the received user authentication data (user ID) with the user ID that is registered in the authentication database 21 (S72). With this, the authentication processing section 22 judges whether or not the stamp service provider terminal device 53 is authorized to use the data use limitation setting server 41 (S73).

If the stamp service provider terminal device 53 is authorized to use the data use limitation setting server 41 as a result of the judgment of the authentication processing section 22, the communication control section 11 requests the stamp service provider terminal device 53 to send the content data and the use limitation setting data (S74).

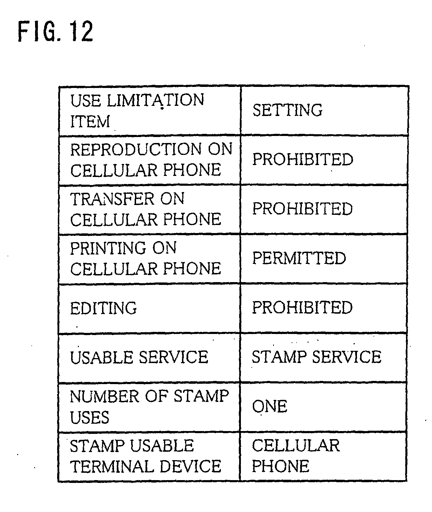

In response to this request (S62), the stamp service provider terminal device 53 sends the content data and the use limitation setting data to the data use limitation setting server 41 (S63). Here, the content data may be sent either together with or separately from the use limitation setting data. Note that, if the content data is sent separately from the use limitation setting data, the use limitation setting data is created as in the data use limitation setting system shown in Figure 1, for example, as described earlier. Figure 12 shows an example of the user limitation setting data here. In this use limitation setting data, the reproduction and transfer of the content data are prohibited and the printing of the content data is permitted on the user cellular phone terminal device 52. Further, the editing is prohibited on any type of terminal device, a service that can use the content data is only the stamp service, the number of uses of the stamp is one, and a usable terminal for the stamp service is only a cellular phone.

When receiving the content data and the use limitation setting data from the stamp service provider terminal device 53 (S75), the creator information acquiring section 14 in the data use limitation setting server 41 acquires the creator information embedded in the content data, namely a serial ID assigned to the stamp service provider terminal device 53, for example, (S76) and supplies the acquired creator information to the user authenticating section 12.

In accordance with the table showing correspondence between the user authentication data and the creator information, the authentication processing section 22 in the user authenticating section 12 judges whether or not the creator information that is supplied from the creator information acquiring section 14 is identical to the creator information that has been registered in the authentication database 21 and that corresponds to the user ID (S77).

If the received creator information is not identical to the pre-registered creator information as a result of the judgment of the user authenticating section 12, the processing ends. If the received creator information is identical to the pre-registered creator information, on the other hand, the data use limitation setting section 13 sets the data use limitation on the content data in accordance with the use limitation setting data (S78).

Here, if necessary, the billing section 15 performs billing processing on a stamp service provider. Note that, the billing processing can be performed in any processing that sets the data use limitation on the content data.

After this, the communication control section 11 in the data use limitation setting server 41 sends to the stamp service provider terminal device 53, the content data on which the use limitation is set (S79). The stamp service provider terminal device 53 receives the content data (S64).

Then, the stamp service provider sends from the stamp service provider terminal device 53 to the stamp service providing server 54, the content data on which data use limitation is set, thereby providing the user with the stamp service.

The user who uses the stamp service downloads the content data from the stamp service providing server 54, using the user cellular phone terminal device 52. If necessary, the stamp service providing server 54 may performs billing processing on the user cellular phone terminal device 52 for using the stamp service. Further, the user may register as a member on the stamp service providing server 54 so that the registered user can freely download the content data by paying a membership fee.

The user cellular phone terminal device 52 which downloads the content data (affixing content data) from the stamp service providing server 54 permits the user to use the stamp service only once in accordance with the data use limitation that is set on the content data. Further, the reproduction and transfer of the content data are prohibited on the user cellular phone terminal device 52 (cellular phone).

Further, if the user affixes the content data as a stamp to another content data, the user cellular phone terminal device 52 deletes the affixing content data in accordance with the use conditions (the number of uses of the stamp is one) that is set on the content data in accordance with the use limitation setting data. Note that, instead of deleting the affixing content data, the user cellular phone terminal device 52 may rewrite the data use limitation so that the number of uses of the stamp is reduced by one to 0. Further, instead of allowing the user cellular phone terminal device 52 to have the function of rewriting the data use limitation, the user cellular phone terminal device 52 may store data that associates the affixing content data with the number of uses of the stamp, thereby managing the number of uses of the stamp. The affixing content data whose number of uses becomes 0 cannot be used any more.

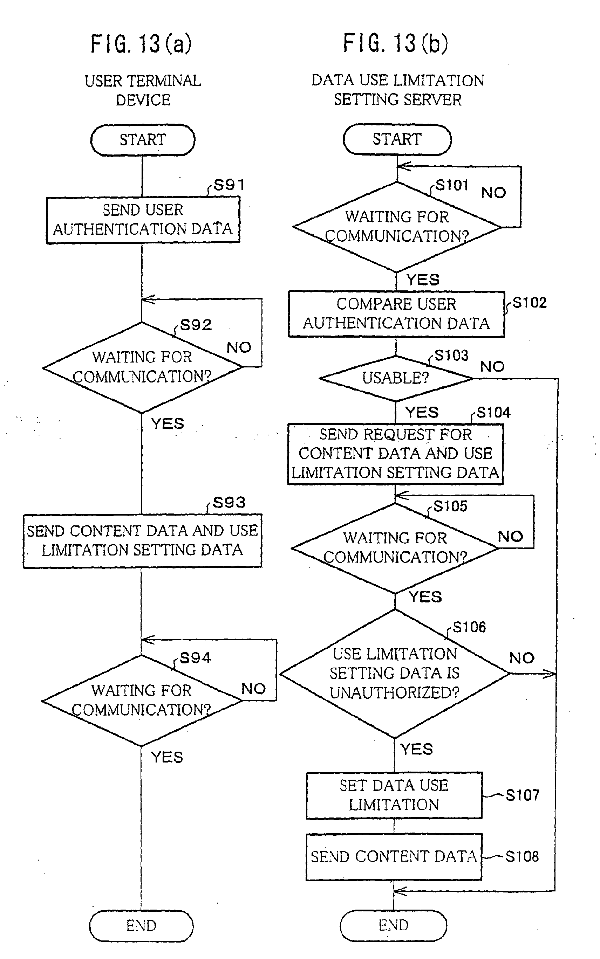

Next, using the arrangement of Figure 1 as an example, the following will 'explain the operation of a data use limitation setting system which prevents the unauthorized use of the content data on which the data use limitation is set, with reference to flow charts shown in Figure 13. Figure 13(a) shows the operation of the user terminal device 2, and Figure 13(b) shows the operation of the data use limitation setting server 1.

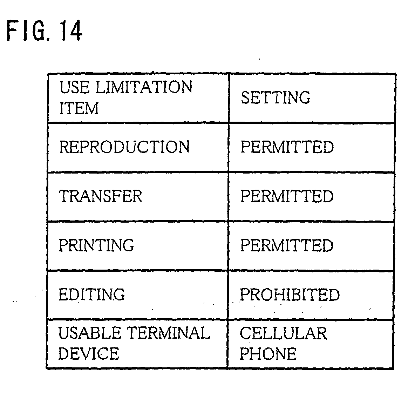

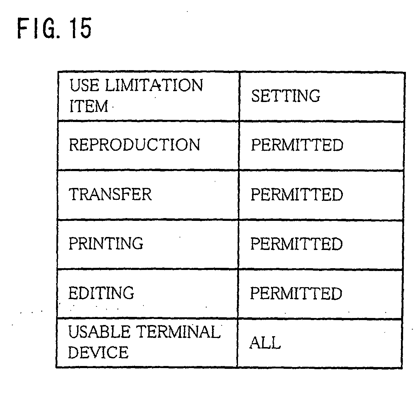

Here, it is assumed that the user terminal device 2 shown in Figure 1 is used by an unauthorized user of the content data. The unauthorized user attempts to set the data use limitation as shown in Figure 15 on the content data on which the data use limitation as shown in Figure 14, for example, has been set, so that the content data whose usable terminal device is designated as a cellular phone and whose editing is prohibited can be used on a PC (personal computer) and can be edited. Further, the unauthorized user acquires in an unauthorized manner, the user authentication data for using the data user limitation setting server 1. The data use limitation setting server 1 can only permit addition of items of the data use limitation on the content data on which the data use limitation has already set, and cannot cancel the data use limitation that has been already set.

First, the user terminal device 2 sends user authentication data to the data use limitation setting server 1 (S91). In the data use limitation setting server 1, when the communication control section 11 receives the user authentication data from the user terminal device 2 (S101), the authentication processing section 22 in the user authenticating section 12 compares the received user authentication data with the user authentication data that is registered in the authentication database 21 (S102). In this case, the authentication processing section 22 judges that the user terminal device 2 is authorized to use the data use limitation setting server 1 (S103). With this, the communication control section 11 in the data use limitation setting server 1 requests the user terminal device 2 to send the content data and the use limitation setting data (S104).

In response to this request (S92), the user terminal device 2 sends to the data use limitation setting server 1, (A) the content data whose data use limitation is to be rewritten in an unauthorized manner and (B) the use limitation setting data shown in Figure 15 (S93).

When receiving the content data and the use limitation setting data from the user terminal device 2 (S105), the data use limitation setting section 13 in the data use limitation setting server 1 compares the received use limitation setting data with the data use limitation that has been already set on the content data. With this, the data use limitation setting section 13 judges that the received use limitation setting data is an unauthorized use limitation setting data which cancels the use limitation that is currently set on the content data, thereby interrupting the processing (S106).

With the operation as described above, the unauthorized use of the content data can be prevented even if the data use limitation setting server 1 is used in an unauthorized manner.

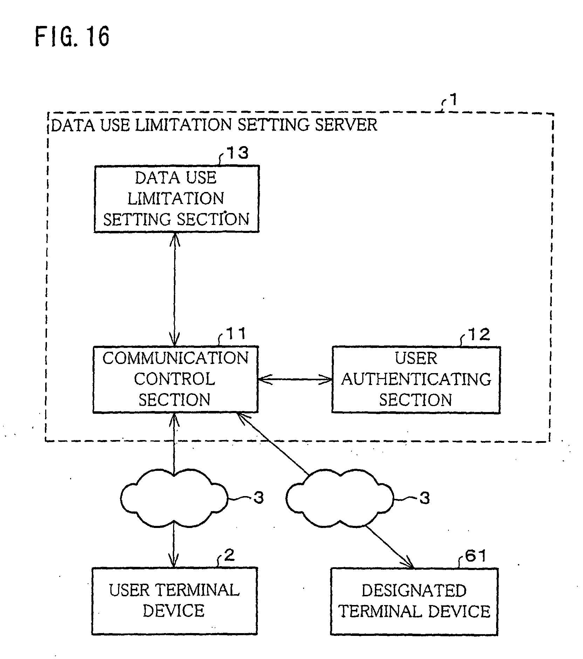

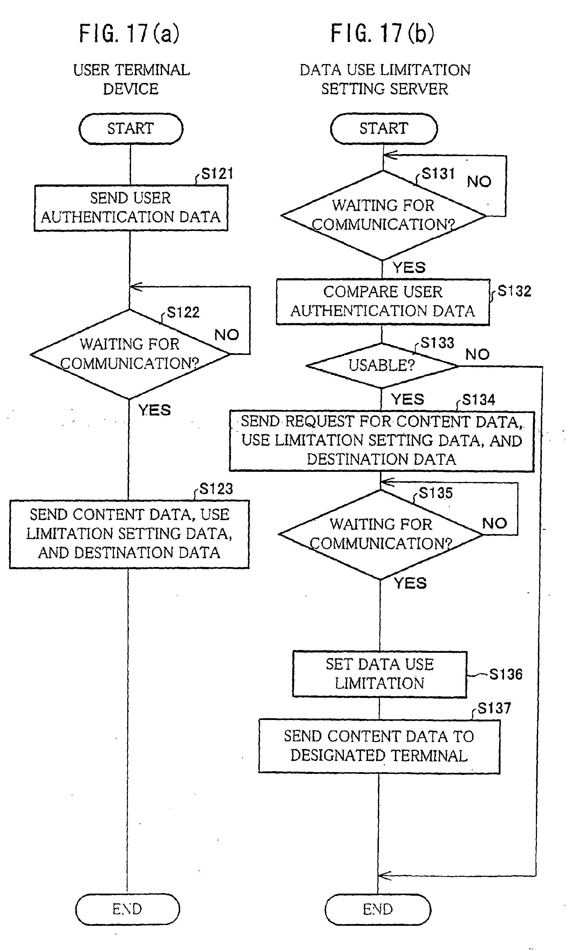

Next, with reference to a block diagram shown in Figure 16 and flow charts shown in Figure 17, respectively, the arrangement and the operation of the data use limitation setting system in a case where the content data on which the data use limitation is set is sent to a designated terminal device will be explained. Note that, Figure 17(a) shows the operation of the user terminal device 2, and Figure 17(b) shows the operation of the data use limitation setting server 1.

In Figure 16, a designated terminal device 61 is a destination to which the content data on which the data use limitation is set is sent. The destination is designated by the creator of the content data. The destination may be a company which actually sells the content data to the user, a client who requested the work (content data), or the like. The creator of the content data requests the data use limitation setting server 1 to set the data use limitation that prohibits editing, and to send to the designated terminal device 61, the content data on which the data use limitation has been set. With this, the creator allows the content data that is created by the creator to be used without being altered.

First, the user terminal device 2 sends user authentication data to the data use limitation setting server 1 (S121) so as to confirm whether or not the user is authorized to use the data use limitation setting server 1.

In the data use limitation setting server 1, when the communication control section 11 receives the user authentication data from the user terminal device 2 (S131), the authentication processing section 22 in the user authenticating section 12 compares the received user authentication data with the user authentication data that is registered in the authentication database 21 (S132). With this, the authentication processing section 22 judges whether or not the user terminal device 2 is authorized to use the data use limitation setting server 1 (S133).

If the user (creator of the content data) is authorized to use the data use limitation setting server 1 as a result of the judgment of the authentication processing section 22, the communication control section 11 requests the user terminal device 2 to send the content data, the use limitation setting data, and destination data indicating the destination of the content data on which the data use limitation has been set (S 134).

In response to this request (S122), the user terminal device 2 sends the content data, the use limitation setting data, and the destination data to the data use limitation setting server 1 (S123).

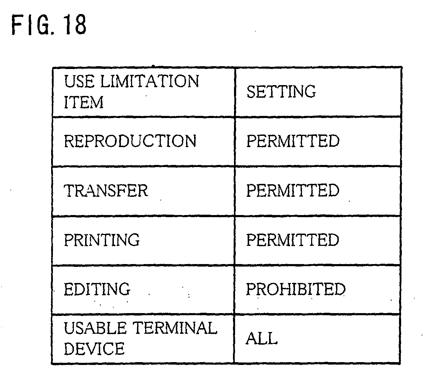

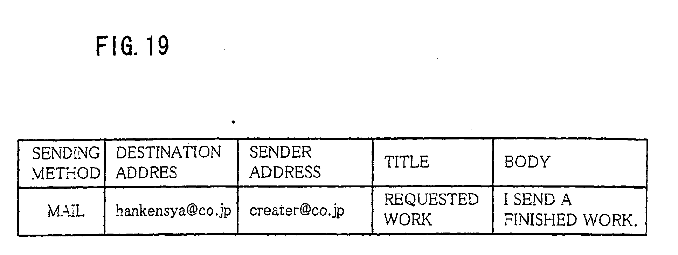

Figure 18 shows an example of the use limitation setting data. In Figure 18, editing on the content data is designated to be prohibited. Figure 19 shows an example of the destination data. Here, a mail format is designated as the sending method, and a destination address, a sender address, a title, and a body are set. Note that, the sender address may have been registered as a user so as to be automatically designated when a mail is to be sent. Further, the sending method is not limited to this example, but a HTTP request may be used.

When receiving the content data, the use limitation setting data, and the destination data from the user terminal device 2 (S135), the data use limitation setting section 13 in the data use limitation setting server 1 sets the use limitation that prohibits editing on the content data in accordance with the use limitation setting data (S136). After this, the communication control section 11 sends to the designated terminal device 61 designated by the destination data, the content data on which the use limitation has been set (S137).

With the foregoing operation, the content data on which the data use limitation has been set can be directly sent from the data use limitation setting server 1 to the designated terminal device 61 without going through the user terminal device 2 which requested the processing.

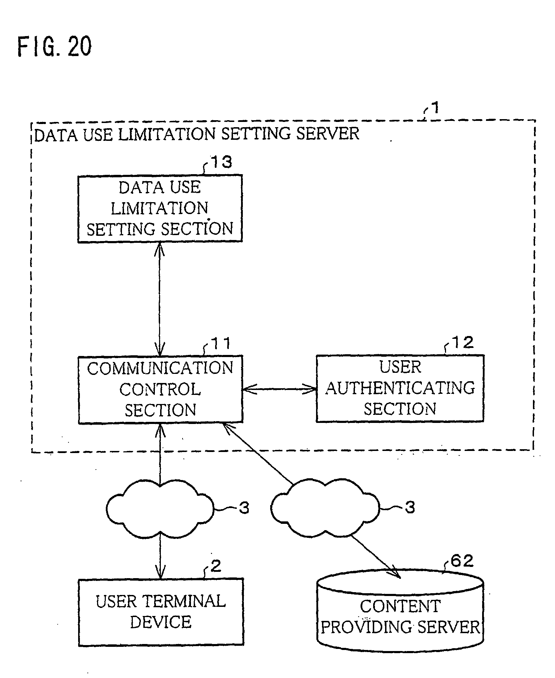

Next, Figure 20 shows an arrangement of the data use limitation setting system in a case where the content data on which the data use limitation has been set is sent to a content providing server. The data use limitation setting server shown in Figure 20 is provided with the data use limitation setting server 1, the user terminal device 2, and a content providing server 62.

In the data use limitation setting system, the data use limitation setting server 1 is only an example, and may be another data use limitation setting server 31 or 41. The content providing server 62 holds content data on which the data use limitation has been set so as to provide the content data for the user who uses the content data. In other words, the content providing server 62 is a server which sells and distributes the content data. The content providing server 62 is a television station, a radio station, a content selling company, and the like, which are connected to the data use limitation setting server 1 via the Internet 3, for example.

After the data use limitation is set on the content data, the content data is sent from the data use limitation setting server 1 to the content providing server 62, and then provided to the user of the content data from the content providing server 62. The content data here is sample moving image data, for example, whose usable and reproducible time is limited and whose editing is prohibited. Further, the transfer of the content data from the user terminal device 2 to another user terminal device 2, etc., is not prohibited. With this, the content data is freely exchanged among the users, so that advertising effects are expected.

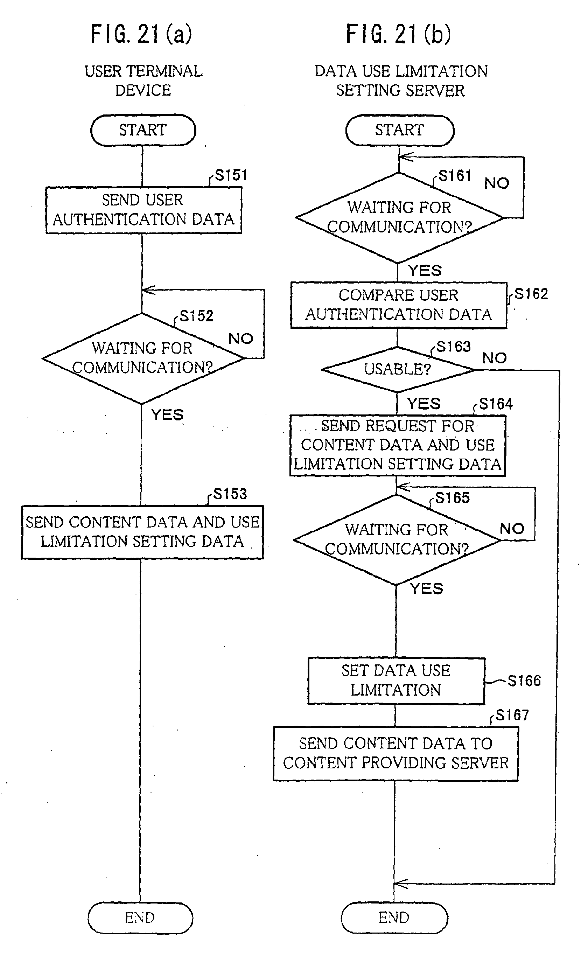

The operation of the user terminal device 2 and the data use limitation setting server 1 in this case will be explained with reference to flow charts shown in Figure 21. Figure 21(a) shows the operation of the user terminal device 2. Figure 21(b) shows the operation of the data use limitation setting server 1.

First, the user terminal device 2 sends user authentication data to the data use limitation setting server 1 (S151) so as to confirm whether or not the user is authorized to use the data use limitation setting server 1.

In the data use limitation setting server 1, when the communication control section 11 receives the user authentication data from the user terminal device 2 (S161), the authentication processing section 22 in the user authenticating section 12 compares the received user authentication data with the user authentication data that is registered in the authentication database 21 (S162). With this, the authentication processing section 22 judges whether or not the user terminal device 2 is authorized to use the data use limitation setting server 1 (S 163).

If the user (creator of the content data) is authorized to use the data use limitation setting server 1 as a result of the judgment of the authentication processing section 22, the communication control section 11 requests the user terminal device 2 to send the content data and the use limitation setting data (S 164).

In response to this request (S152), the user terminal device 2 sends the content data and the use limitation setting data to the data use limitation setting server 1 (S153).

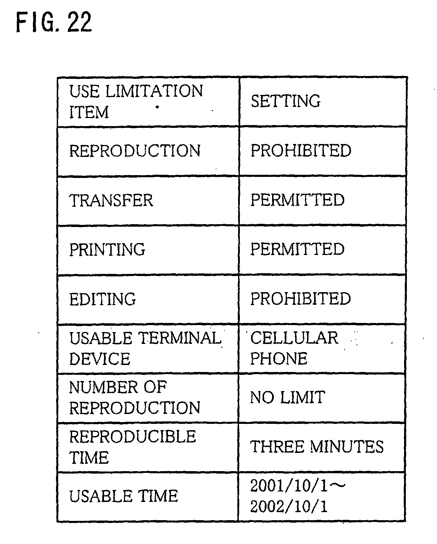

Figure 22 is an example of the user limitation setting data. In Figure 22, reproduction and editing on the content data are designated to be prohibited, and usable time and reproducible time is designated.

When receiving the content data and the use limitation setting data from the user terminal device 2 (S165), the data use limitation setting section 13 in the data use limitation setting server 1 sets the data use limitation on the content data in accordance with the use limitation setting data so as to prohibit reproduction and editing of the content data and limit usable and reproducible time of the content data (S166). After this, the communication control section 11 sends to the content providing server 62, the content data on which the data use limitation has been set (S167).

The content data received by the content providing server 62 can be downloaded in such a manner that the user of the content data accesses the content providing server 62 through a terminal device via the Internet, for example. The content data downloaded to the terminal device can be usable (browsable) on the terminal device, for example. In this case, the terminal device holds software for using (browsing) the content data. The software may be downloaded from the content providing server 62 together with the content data, or may be voluntarily downloaded by the user from the content providing server 62, for example. Alternatively, the software may have been distributed to the terminal device of the user from the content providing server 62, etc., in such a case where the user has registered as a member for using the content data, for example.

Further, if the user uses on the terminal device, the content data downloaded form the content providing server 62, the use limitation on the content data may be executed by the software in accordance with the data use limitation that is set on the content data.

Further, in accordance with predetermined agreements, the present data use limitation setting system can appropriately perform billing processing on the user terminal device 2 (creator of the content data) which requested the data use limitation to be set on the content data in processing where the data use limitation is set on the content data by the data use limitation setting server 1, 31, or 41. Likewise, in accordance with predetermined agreements, the present data use limitation setting system can appropriately perform billing processing on the terminal device of the user (user of the content data) which downloaded the content data in processing where the content data is downloaded from the content providing server 62. With this, the data use limitation setting system can properly make profits.

Note that, if the limitation on the number of uses is not set on the content data, for example, the billing price may depend on the number of uses of the content data by the user.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### INDUSTRIAL APPLICABILITY

As described above, according to the data use limitation setting method of the present invention, a data use limitation is set in the data use limitation setting step on the limitation setting target data sent from the user terminal device, if the success of the authentication is judged in the authentication judging step.

Further, according to the data use limitation setting apparatus of the present invention, the data use limitation setting means sets a data use limitation on the limitation setting target data sent from the user terminal device, if the authentication judging means judges the success of the authentication.

With the data use limitation setting method of the present invention and the data use limitation setting apparatus of the present invention, it is not necessary to provide the user terminal device with a device for setting the data use limitation.

Further, the data use limitation on the limitation setting target data is not set at the user terminal device, but set at a data use limitation setting apparatus which communicates with the user terminal device via the Internet, for example, and which performs the foregoing steps.

Therefore it is possible to widely provide a highly reliable system whose method to set the data use limitation is not easily subjected to unauthorized analysis. With this, it is possible to widely provide a highly reliable system whose method to set the data use limitation is not easily subjected to unauthorized analysis.

## Claims

1. A data use limitation setting method, comprising:
a data receiving step of receiving from a user terminal device, (A) limitation setting target data and (B) user authentication data corresponding to the limitation setting target data;
an authentication judging step of judging in accordance with the user authentication data, success or failure of authentication; and
a data use limitation setting step of, if the success of the authentication is judged in the judgment, setting on the limitation setting target data, a data use limitation for limiting use of the limitation setting target data.

2. The data use limitation setting method as set forth in claim 1, wherein:
the limitation setting target data includes creator information for specifying a creator of the limitation setting target data,
the data use limitation setting method further comprising:
a creator information acquiring step of acquiring the creator information from the limitation setting target data; and
an association judging step of judging whether or not the user authentication data is associated with the creator information,
the data use limitation setting step being carried out only if, in the association judging step, the creator information that is acquired from the limitation setting target data is judged to be associated with the user authentication data that is received in accordance with a request to set the data use limitation on the limitation setting target data.

3. The data use limitation setting method as set forth in claim 1, wherein:
in the data use limitation setting step, the data use limitation is desirably selected by a user, the data use limitation being set on the limitation setting target data in accordance with use limitation setting data received from the user terminal device.

4. The data use limitation setting method as set forth in claim 1, further comprising the step of:
sending to a designated terminal device in response to a request sent from the user terminal device, the limitation setting target data on which the data use limitation has been set in the data use limitation setting step.

5. The data use limitation setting method as set forth in claim 1, further comprising the step of:
sending to a device that has a purpose of providing the limitation setting target data, the limitation setting target data on which the data use limitation has been set in the data use limitation setting step.

6. The data use limitation setting method as set forth in claim 1, further comprising the step of:
billing a user who requested to set the data use limitation on the limitation setting target data.

7. The data use limitation setting method as set forth in claim 1, wherein:
the data use limitation setting step includes the substep of, if the success of the authentication is judged in the authentication judging step, presenting settable use limitation items to the user terminal device; and
in the data use limitation setting step, the data use limitation is set on the limitation setting target data in accordance with one or more of the use limitation items that are selected on the user terminal device.

8. The data use limitation setting method as set forth in claim 1, wherein:
the data use limitation is not resettable in the data use limitation setting step, if the data use limitation has been already set on the limitation setting target data.

9. The data use limitation setting method as set forth in claim 1, wherein:
the data use limitation that is set on the limitation setting target data in the data use limitation setting step is a pre-registered data use limitation in a database, the pre-registered data use limitation corresponding to the data authentication data.

10. The data use limitation setting method as set forth in claim 1, wherein:
the data use limitation limits the limitation setting target data with respect to at least one of reproduction, storing, printing, transfer, editing, a usable time, and a usable reproducing terminal device of the limitation setting target data.

11. The data use limitation setting method as set forth in claim 1, further comprising the step of:
limiting the number of uses of the limitation setting target data.

12. A data use limitation setting apparatus, comprising:
communication means for sending and receiving data to and from a user terminal device;
authentication judging means for judging in accordance with user authentication data received from the user terminal device, success or failure of authentication; and
data use limitation setting means for, if the authentication judging means judges the success of the authentication, setting on limitation setting target data that is received from the user terminal device, a data use limitation for limiting use of the limitation setting target data, the limitation setting target data corresponding to the user authentication data.

13. The data use limitation setting apparatus as set forth in claim 12, wherein:
the limitation setting target data includes creator information for specifying a creator of the limitation setting target data,
the data use limitation setting apparatus further comprising:
creator information acquiring means for acquiring the creator information from the limitation setting target data; and
association judging means for judging whether or not the user authentication data is associated with the creator information,
the data use limitation setting means setting the data use limitation only if the association judging means judges that the creator information that is acquired from the limitation setting target data is associated with the user authentication data that is received in accordance with a request to set the data use limitation on the limitation setting target data.

14. The data use limitation setting apparatus as set forth in claim 12, wherein:
the data use limitation setting means presents settable use limitation items to the user terminal device, and sets the data use limitation on the limitation setting target data in accordance with one or more of the use limitation items that are selected on the user terminal device, if the authentication judging means judges the success of the authentication.

15. The data use limitation setting apparatus as set forth in claim 12, wherein:
the data use limitation is not resettable by the data use limitation setting means, if the data use limitation has been already set on the limitation setting target data.

16. The data use limitation setting apparatus as set forth in claim 12, further comprising:
a database which contains a pre-registered data use limitation corresponding to the user authentication data,
the data use limitation that is set on the limitation setting target data by the data use limitation setting means if the authentication judging means judges the success of the authentication being the pre-registered data use limitation in the database.

17. The data use limitation setting apparatus as set forth in claim 12, wherein:
the data use limitation limits the limitation setting target data with respect to at least one of reproduction, storing, printing, transfer, editing, a usable time, and a usable reproducing terminal device of the limitation setting target data.

18. The data use limitation. setting apparatus as set forth in claim 12, further comprising:
use number limiting means for limiting the number of uses of the limitation setting target data.

19. A data use limitation setting program for causing a computer to realize each of the means in the data use limitation setting apparatus as set forth in any one of claims 12 through 18.

20. A computer-readable recording medium containing the data use limitation setting program as set forth in claim 19.
